# EUROPÄISCHE PATENTSCHRIFT

(11) **EP 1 225 427 B1**
(45) Veröffentlichungstag und Bekanntmachung des Hinweises auf die Patenterteilung: **11.07.2012**
(21) Anmeldenummer: 02007631.1
(22) Anmeldetag: 22.10.1999
(51) Int. Cl.: G01D 5/244, B62D 15/02, G01B 7/30

(54) **Drehgeber**
Rotation sensor
Capteur de rotation

(30) Priorität: 24.10.1998 DE 19849108
(43) Veröffentlichungstag der Anmeldung: 24.07.2002
(62) Teilanmeldung aus: 99121098.0
(73) Patentinhaber: Fritz Kübler GmbH Zähl-und Sensortechnik, 78054 Villingen-Schwenningen (DE)
(72) Erfinder: Steiner, Viktor, 78532 Tuttlingen (DE)
(74) Vertreter: Jackisch-Kohl, Anna-Katharina

(56) Entgegenhaltungen:
- EP-A- 0 550 794
- DATABASE WPI Section EI, Week 197705 Derwent Publications Ltd., London, GB; Class W05, AN 1977-B0004Y XP002323422 & SU 515 135 A (TYURIN L N) 10. Juni 1976 (1976-06-10)

## Beschreibung

Die Erfindung betrifft einen Drehgeber nach dem Oberbegriff des Anspruches 1.

Es sind Multiturn-Drehgeber bekannt (EP0550 794 A2), die mehrere, über ein Untersetzungsgetriebe miteinander verbundene Winkelcodierscheiben aufweisen. Damit im Falle eines Fehlers oder einer Beschädigung des Drehgebers die Maschine oder Vorrichtung, in der der Drehgeber eingesetzt wird, nicht ausfällt bzw. der Ausfall erkannt wird, werden mehrere Drehgeber eingesetzt. Der Einsatz mehrerer Drehgeber ist jedoch kostenaufwendig.

Es ist aus dieser Druckschrift weiter bekannt, zwei um 45° gegenüber einem Nulldurchgang des Drehgebers angeordnete Sensoren vorzusehen, denen jeweils ein Zähler zugeordnet ist. Bei einer bestimmten Drehrichtung der Geberwelle läuft der aktuelle Zählerstand des einen Zählers voraus und des anderen Zählers hinterher. Eine Datenselektionseinheit wählt den Zähler mit dem jeweils richtigen Datenbestand aus und schaltet ihn synchron mit dem Nulldurchgang der Codierscheibe durch. Fällt einer der Zähler aus, können die Positionswerte der Geberwelle nicht erfasst werden.

Es ist ein weiterer Drehgeber bekannt (Database WPI Section EI, Week 197705 Derwent Publications Ltd., London, GB; Class W05, AN 1977-B0004Y XP002323422 & SU 515 135 A (TYURIN L N) 10. Juni 1976 (1976-06-10)), bei dem der auf einer Drehgeberwelle sitzenden Codierscheibe mehrere Sensoren zugeordnet sind, die zu Gruppen zusammengefasst und deren Signale einem Zähler zugeführt werden.

Der Erfindung liegt die Aufgabe zugrunde, den gattungsgemäßen Drehgeber so auszubilden, dass er bei kostengünstiger Ausbildung zuverlässig die Anzahl Umdrehungen der Geberwelle erfassen kann.

Diese Aufgabe wird beim gattungsgemäßen Drehgeber erfindungsgemäß mit den kennzeichnenden Merkmalen des Anspruches 1 gelöst.

Beim erfindungsgemäßen Drehgeber sind wenigstens zwei Sensoren und Zähler vorgesehen, mit denen die Zahl der Umdrehungen erfasst wird. Die Sensoren und die zugehörigen Zähler liegen jeweils in einem Zählkanal. Der Sensor-Pegelkomparator vergleicht die Pegelzustände der Signale der Sensoren mit in einer Tabelle abgelegten Bitkombinationen. Bei zulässigen Bit-kombinationen werden weitere Aktionen abgeleitet. Bei nicht zulässigen Bit-kombinationen wird eine Warnung ausgegeben. Die Inhalte der Zähler werden im Zählerkomparator verglichen. Bei Abweichungen wird der entsprechende Zähler gesperrt oder es wird ein Warnsignal ausgegeben. Fällt ein Zähler und/oder ein Sensor aus, dann stehen der andere Sensor und der andere Zähler weiterhin zur Verfügung, so dass die Positionswerte der Geberwelle einwandfrei erfasst werden können. Durch die Redundanz werden auftretende Fehler wirkungsvoll abgefangen, so dass Maschinenstillstandszeiten vermieden werden.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert. Es zeigen
- Fig. 1: in schematischer Darstellung einen erfindungsgemäßen Drehgeber im Axialschnitt,
- Fig. 2: einen Schaltplan des Drehgebers gemäß Fig. 1,
- Fig. 3: den Zeitverlauf verschiedener Sensoren des erfindungsgemäßen Drehgebers gemäß Fig. 1,
- Fig. 4: einen Schaltplan einer zweiten Ausführungsform eines erfindungsgemäßen Drehgebers.

Der Drehgeber hat ein Gehäuse 1 mit einem Flansch 2, der Lager 3, 4 für eine Geberwelle 5 aufweist. Sie ragt in das Gehäuse 1 und trägt eine Codescheibe 6, mit der die Drehung der Geberwelle 5 um 360° erfaßt wird. Der Codescheibe 6 ist eine Lichtquelle 7 im Flansch 2 zugeordnet.

Die Geberwelle 5 trägt mit Abstand zur Codescheibe 6 drehfest einen Codeträger 8, dem am Umfang mindestens drei Sensoren 9 bis 11 zugeordnet sind. Sie sind an eine Auswerteelektronik 12 angeschlossen, die auf einer Leiterplatte 13 vorgesehen ist. Sie ist im Gehäuse 1 im Bereich oberhalb des Codeträgers 8 untergebracht. Der Codeträger 8 mit den zugeordneten Sensoren 9 bis 11 dient zur Erfassung mehrerer Umdrehungen der Geberwelle 5.

Der Codescheibe 6 ist eine weitere Auswerteelektronik 14 zugeordnet, die sich auf einer Leiterplatte 15 im Gehäuse 1 befindet. Die Leiterplatte 15 befindet sich im Bereich zwischen der Codescheibe 6 und dem Codeträger 8 und weist eine Durchtrittsöffnung 16 für die Geberwelle 5 auf.

Die Spannungsversorgung der beiden Auswerteelektroniken 12 und 14 erfolgt im Normalbetrieb durch eine externe Spannungsquelle. Wird die externe Spannungsquelle abgeschaltet, erfolgt die Spannungsversorgung für die Auswerteelektronik 12 durch eine Batterie oder einen Akku 17, die (der) im Flansch 2 gelagert ist.

Die Codescheibe 6 und die zugeordnete Lichtquelle 7 sind in bekannter Weise ausgebildet. Die Codescheibe 6 löst eine 360°-Drehung der Geberwelle 5 in bekannter Weise durch Absolutcodierung in entsprechend viele Positionen auf, so daß die Winkelstellung sofort nach Einschalten des Drehgebers für eine Umdrehung zur Verfügung steht. Die Absolutcodierung kann optisch, magnetisch oder induktiv erfolgen.

Der Codeträger 8 mit den Sensoren 9 bis 11 erfaßt die Anzahl vollständiger Umdrehungen der Geberwelle 5. Zusammen mit der Codescheibe 6 stellt er die Gesamtwinkel- oder Gesamtweg-Information zur Verfügung.

Der Codeträger 8 kann optisch, magnetisch, induktiv oder kapazitiv arbeiten. Er kann als Scheibe, als Ring oder dergleichen ausgebildet sein. Er ist drehfest mit der Geberwelle 5 verbunden und weist mindestens eine Signalquelle oder Code-Spur auf. Die Sensoren 9 bis 11 können optisch, magnetisch, induktiv oder kapazitiv arbeiten und lesen den Code des Codeträgers 8 aus und stellen die gemessenen Werte der nachfolgenden Auswerteelektronik 12 zur Verfügung. Sie setzt die von den Sensoren 9 bis 11 gelieferten Codes in die Anzahl der Umdrehungen der Geberwelle 5 um. Die Auswerteelektronik 12 hat außerdem die Aufgabe, elektromagnetische Störungen zu unterdrücken und eventuell eine Datenkorrektur im Falle einer Störung und Ausgabe einer Warnung oder einer Fehlermeldung vorzunehmen, falls zum Beispiel einer der Sensoren ausfällt. Mit der Batterie 17 werden die Informationen des Codeträgers 8 bzw. der Sensoren 9 bis 11 bzw. der Auswerteelektronik im Falle einer Betriebsspannungsabschaltung gepuffert.

Das Gehäuse 1 ist mit einem Stecker 18 als Schnittstelle versehen, über den der Drehgeber mit einem Rechner verbunden werden kann.

Abweichend vom dargestellten Ausführungsbeispiel können der Codeträger 8 für den sogenannten Multiturn und die Codescheibe 6 für den sogenannten Singleturn auch eine Einheit bilden.

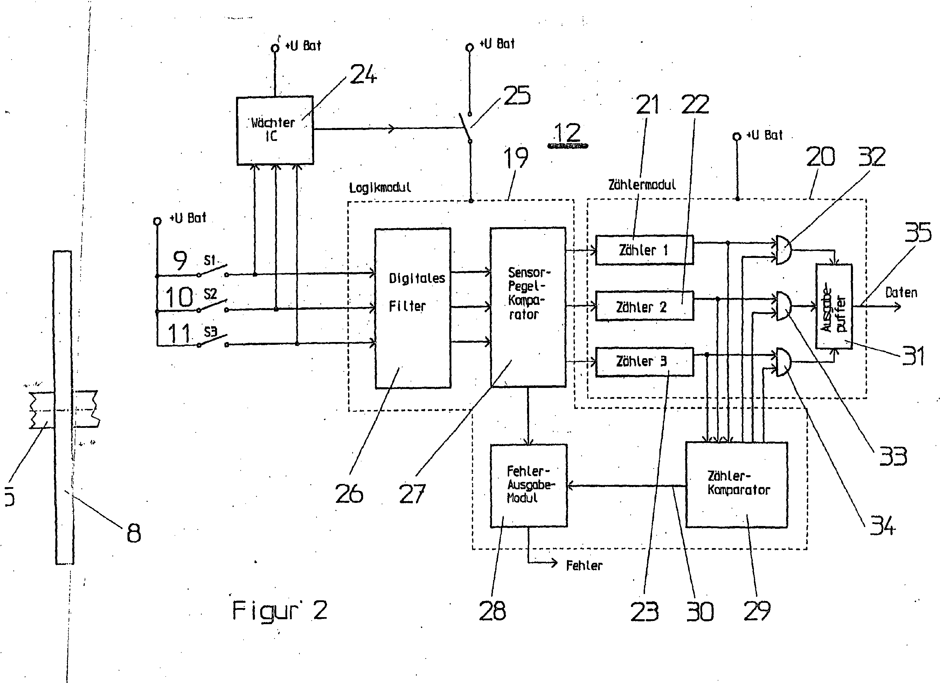

Wie Fig. 2 zeigt, werden die Sensoren 9 bis 11 mit der Batteriespannung U_{Bat} versorgt. Die Auswerteelektronik 12 hat ein Logikmodul 19 und ein Zählermodul 20. Beide Module 19, 20 werden mit der Batteriespannung U_{Bat} versorgt. Die Sensoren 9 bis 11 werden ständig bestromt. Das Logikmodul 19 wird nur jeweils bei einem Pegelwechsel der Sensoren 9 bis 11 für kurze Zeit geweckt, bis die entsprechenden Daten verarbeitet sind. Das dem Logikmodul 19 nachgeschaltete Zählermodul 20 kann synchron mit dem Logikmodul 19 geweckt werden. In diesem Fall müssen die Zähler 21 bis 23 des Zählermoduls 20 durch nicht flüchtige Speicher, zum Beispiel EEPROMs, ergänzt werden, die spannungsfrei den letzten Zählerwert beibehalten. Es ist aber auch möglich, die Zähler 21 bis 23 des Zählermoduls 20 ständig zu bestromen. Trotz einer hochohmigen Ausgestaltung der Zähler 21 bis 23 kann eine Fehlzählung durch Sperren der Zählereingänge beim Abschalten des Logikmoduls 19 vermieden werden.

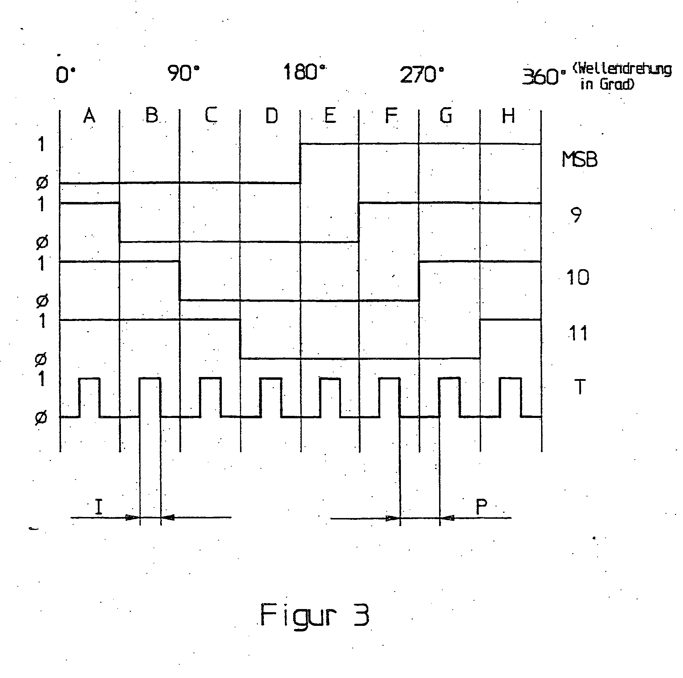

Der Codeträger 8, der beispielsweise aus einer entsprechend magnetisierten Scheibe oder einem Magnetring besteht, moduliert bei Drehung der Geberwelle 5 die drei Sensoren 9 bis 11, die beispielsweise Reedschalter sind. Hierbei entsteht ein Codeverlauf, wie er in Fig. 3 für die drei Sensoren 9 bis 11 bei einer 360°-Drehung der Geberwelle 5 dargestellt ist. Die Spur T in Fig. 3 bleibt in diesem Fall unberücksichtigt. Die drei Sensoren 9 bis 11 schalten zeitlich nacheinander, wie der Codeverlauf in Fig. 3 zeigt. Nach jeweils einer Drehung von 180° schalten die Sensoren 9 bis 11, wobei diese Sensoren Schaltabstände von 45° zueinander haben.

In Fig. 3 ist die höchstwertige Spur MSB (most significant bit) der Codescheibe 6 dargestellt, die einen Pegelwechsel nach jeweils einer 180°-Drehung der Geberwelle 5 vornimmt. Mit dem Ausgangssignal MSB wird die 360°-Drehung der Geberwelle 5 so hoch aufgelöst, daß die Winkelstellung sofort nach Einschalten des Drehgebers für eine Umdrehung zur Verfügung steht. Mit den Ausgangssignalen der Sensoren 9 bis 11 wird die Zahl der 360°-Drehungen der Geberwelle 5 erfaßt.

Bei jedem Flankenwechsel der Signalpegel der Sensoren 9 bis 11 bestromt ein den Sensoren nachgeschaltetes Wächter-IC 24, das ebenfalls mit der Batteriespannung U_{Bat} versorgt wird, das nachgeschaltete Logikmodul 19. Zwischen dem Wächter-IC 24 und dem Logikmodul 19 liegt ein Schalter 25, der geöffnet ist, solange das Wächter-IC 24 kein Signal vom jeweiligen Sensor 9 bis 11 erhält. Das Logikmodul 19 bleibt somit ausgeschaltet, bis es durch Schließen des Schalters 25 mittels des Wächter-ICs 24 bestromt wird.

Das Logikmodul 19 weist ein digitales Filter 26 auf (Fig. 2), das eventuelle Störimpulse beispielsweise durch mehrfaches Auslesen der Logikpegel filtert. Ist ein Störimpuls die Ursache für die Aktivierung des Logikmoduls 19 gewesen, ergeht eine Rückmeldung an das Wächter-IC 24. Das Logikmodul 19 wird dann ohne weitere Funktion abgeschaltet.

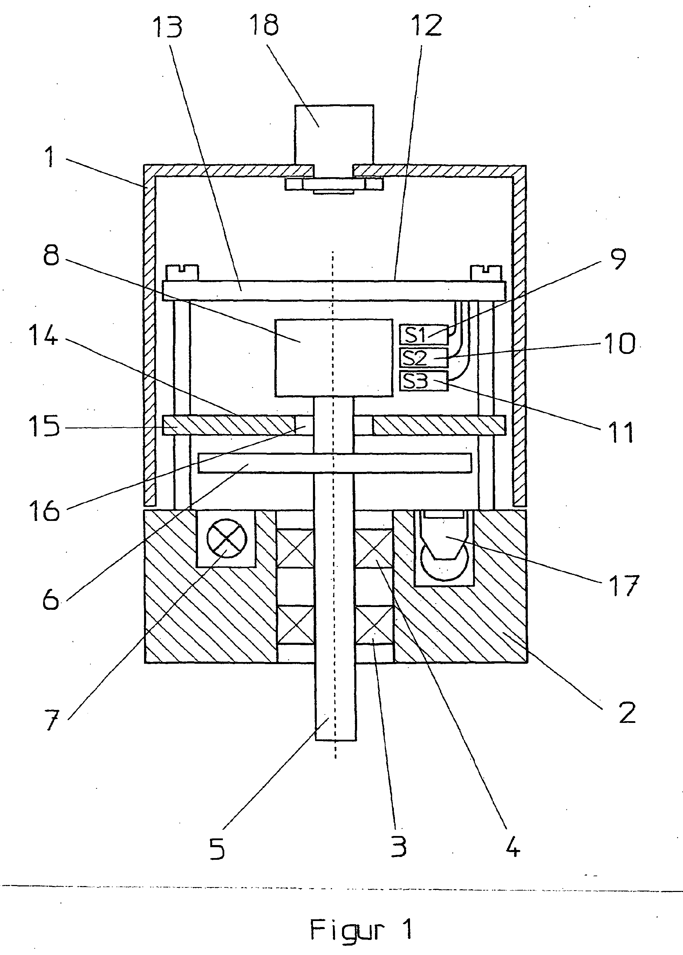

Im Falle eines Nutzsignals als Ursache für die Aktivierung des Logikmoduls 19 werden die Signale der Sensoren 9 bis 11 vom digitalen Filter 26 einem Sensor-Pegelkomparator 27 zugeleitet, der ebenfalls Bestandteil des Logikmoduls 19 ist. Er vergleicht die eingelesenen Pegelzustände 0 bzw. 1 (Fig. 1) der Signale der Sensoren 9 bis 11 mit in einer Tabelle abgelegten Bitkombinationen, die für Segmente A bis H zulässig sind (Fig. 2). Diese Segmente A bis H sind Winkeln von jeweils 45° zugeordnet, so daß einer 360°-Drehung der Geberwelle 5 acht Segmente A bis H zugeordnet sind. Aus dem Vergleich der eingelesenen Pegelzustände der Sensoren 9 bis 11 mit den abgelegten, für die Segmente A bis H zulässigen Bitkombinationen leitet der Sensor-Pegelkomparator 27 weitere Aktionen ab. Dem Sensor-Pegelkomparator 27 sind die Zähler 21 bis 23 des Zählermoduls 20 nachgeschaltet. Je nach Ergebnis des Vergleiches des Sensor-Pegelkomparators 27 kann der Zähler 21 oder 22 oder 23 inkrementiert bzw. dekrementiert werden, oder es kann keine Aktion oder es kann eine Ausgabe einer Warnung und dann Sperren eines der ungültigen Zähler 21 bis 23 oder die Ausgabe eines Fehlers erfolgen. Für den letzten Fall ist dem Sensor-Pegelkomparator 27 ein Fehlerausgabemodul 28 nachgeschaltet, das Teil des Logikmoduls 19 ist und das eine Fehlermeldung ausgibt.

Grundsätzlich würde ein einziger nachgeschalteter Zähler 21 oder 22 oder 23 ausreichen, um die Zählfunktion auszuführen. Um die Sicherheit bei der Erfassung mehrerer Drehungen der Geberwelle 5 zu gewährleisten und weiter zu steigern, sind im dargestellten Ausführungsbeispiel zwei zusätzliche Zähler vorgesehen, so daß in diesem Falle drei Zähler 21 bis 23 vorhanden sind. Ihnen ist ein Zählerkomparator 29 nachgeschaltet, der Teil des Logikmoduls 19 ist, der ständig die Inhalte der drei Zähler 21 bis 23 vergleicht und bei Abweichung den entsprechenden Zähler sperrt, ein entsprechendes Warnsignal 30 an das Fehlerausgabemodul 28 liefert und eine Aktualisierung eines den Zählern 21 bis 23 nachgeschalteten Ausgabepuffers 31 durch den fehlerhaften Zähler blockiert. Er ist Teil des Zählermoduls 20, das ebenso wie das Logikmodul 19 mit Batteriespannung U_{Bat} versorgt wird. Die Zähler 21 bis 23 sind über jeweils ein UND-Glied 32 bis 34 an den Ausgabepuffer 31 angeschlossen, an dessen Ausgang 35 die jeweiligen Meßdaten anliegen. Der Zählerkomparator 29 ist ebenfalls an die UND-Glieder 32 bis 34 angeschlossen. Der Ausgabepuffer 31 erhält somit Daten von den Zählern 21 bis 23 nur, wenn die UND-Bedingung erfüllt ist, d.h. die Zählersignale in Ordnung sind.

Der Einsatz von drei Zählern 21 bis 23 und des Zählerkomparators 29 hat den weiteren Vorteil, daß er für den Fall, daß das digitale Filter 26 nicht greifen sollte und ein Störimpuls auf einer der drei Sensorleitungen zusammen mit den verbleibenden Sensorsignalen eine gültige Bitkombination bildet, zur Änderung eines der drei Zählerinhalte führt. In diesem Falle greift als letzte Sperre der Zählerkomparator 29, der die drei Zählerinhalte in der beschriebenen Weise vergleicht. Der fehlerhafte Zählerstand kann alternativ aber auch korrigiert und der Zählprozeß ohne eine Fehlermeldung fortgesetzt werden.

Bei einer fehlerfreien Funktion erhält jeder Zähler 21 bis 23 das jeweilige Ausgangssignal des zugehörigen Sensors 9 bis 11.

Die Zählfunktion für den Zähler 21 kann zum Beispiel so vorgesehen werden, daß inkrementiert (dekrementiert) wird, wenn ein Pegelwechsel des Signals des Sensors 9 von 0 zu 1 (1 zu 0) stattfindet und gleichzeitig der Pegel des Signals des Sensors 10 "0" ist. Die Synchronisation der Signale des Codeträgers 8 mit den Signalen der Codescheibe 6 beim Übergang der Geberwellenposition von 360° auf 0° geschieht durch einen Pegelvergleich. So wird bei einer Anordnung, welche die Pegellage der Signale MSB und der Signale der Sensoren 9 bis 11 gemäß Fig. 3 erzeugt, der Zählerinhalt des Zählers 21 um 1 dekrementiert, solange die Pegel der Signale MSB und des Sensors 9 "1" sind, da der Zähler vor dem Übergang von 360° auf 0° nach dem beschriebenen Beispiel inkrementiert wird. Für die weiteren Zähler 22, 23 gilt entsprechendes.

Für den Drehgeber kann die Pufferbatterie 17 sehr kompakt gehalten werden, weil der überwiegende Teil der Schaltung, nämlich das Logikmodul 19 und optional das Zählermodul 20, nur kurzzeitig nach einem Sensorereignis aktiv ist und bestromt wird. Das Wächter-IC 24 schließt den Schalter 25 erst dann, wenn ein Flankenwechsel der Signalpegel der Sensoren 9 bis 11 auftritt. Aufgrund der kurzen Aktivzeiten kann die Auswerteelektronik 12 niederohmig und damit unempfindlich für elektromagnetische Störungen ausgelegt werden. Sollte sich dennoch eine sensorseitige elektromagnetische Störung ausbilden, kommt die Schutzschaltung zum Einsatz, die aus dem digitalen Filter 26, dem Sensorpegelkomparator 27 und dem Zählerkomparator 29 besteht. Diese Schutzschaltung kann eine Störung abblocken oder sie erkennen, korrigieren und/oder eine Warnmeldung ausgeben. Der Ausfall eines der Sensoren 9 bis 11 kann durch Vergleich der Zählerstände mittels des Zählerkomparators erkannt und ohne einen Funktionsausfall als Warnung an eine übergeordnete Steuerung gemeldet werden. Sie sorgt dafür, daß zum geeigneten Zeitpunkt eine Wartung ohne Maschinenausfallzeiten erfolgen kann.

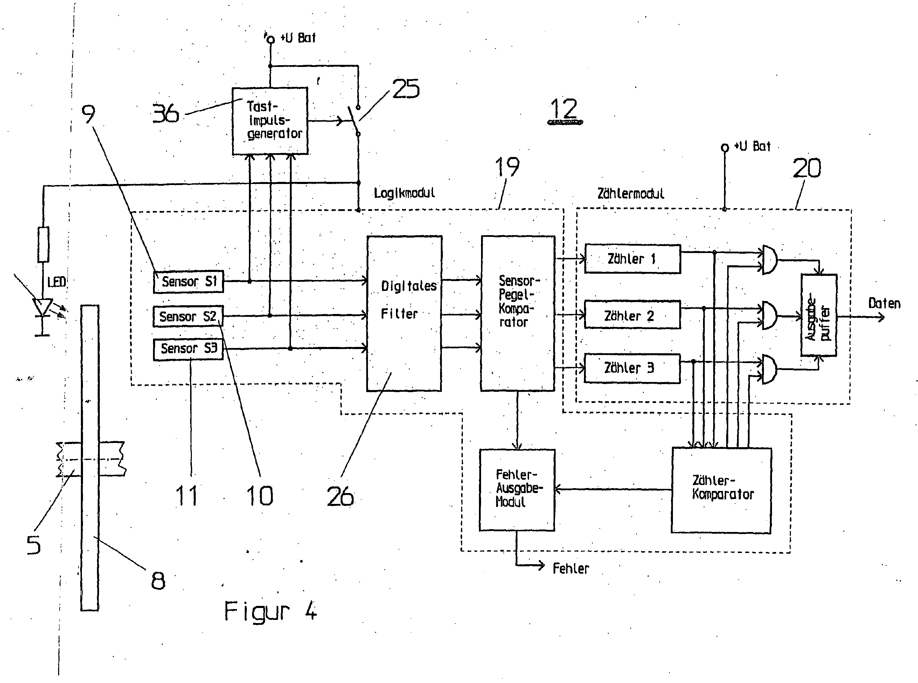

Während bei dem beschriebenen Ausführungsbeispiel lediglich die Sensoren 9 bis 11 ständig bestromt werden müssen, bleibt beim Ausführungsbeispiel nach Fig. 4 die komplette Auswerteschaltung einschließlich der Sensoren 9 bis 11 ausgeschaltet. Anstelle des Wächter-ICs 24 ist ein Tastimpulsgenerator 36 vorgesehen, der Impulse T (Fig 3) erzeugt. Sie haben eine Taktrate, die so berechnet ist, daß mindestens ein Impuls je Segment A bis H erzeugt wird. Im Rhythmus dieser Taktimpulse T werden die Auswerteschaltung (Sensoren 9 bis 11, Logikmodul 19 und optional Zählermodul 20) aktiviert und bestromt. Während dieser aktiven Phasen findet die Auswertung der Signale statt, wie es anhand des vorigen Ausführungsbeispieles im einzelnen beschrieben worden ist. Um den Stromverbrauch klein zu halten, wird ein entsprechend kleines Impuls-Pausen-Verhältnis I/P (Fig. 3) gewählt. Die Impulsdauer I ist kürzer als die Dauer P zwischen zwei aufeinanderfolgenden Impulsen T. Der Taktimpulsgenerator 36 schaltet das Logikmodul 19 über den Schalter 25 im Rhythmus der Taktimpulse T. Das Logikmodul 19 und das Zählermodul 20 sind im übrigen gleich ausgebildet wie beim vorigen Ausführungsbeispiel.

Bei der Ausführungsform gemäß Fig. 4 können magnetische, induktive, kapazitive, optische Sensoren oder mechanische Schalter 9 bis 11 zum Einsatz kommen. Bei optischen Sensoren 9 bis 11 muß auch der zugehörige Sender 37, der eine Lichtquelle, zum Beispiel eine LED, sein kann, im Rhythmus der Taktimpulse T ein- und ausgeschaltet werden. Der Sender 37 liegt in diesem Beispiel auf der den optischen Sensoren 9 bis 11 gegenüberliegenden Seite des Codeträgers 8. Mittels des Schalters 25 wird auch der Sender 37 im Zyklus der Taktimpulse ein- und ausgeschaltet.

Die beschriebenen Ausführungsformen des Drehgebers zeichnen sich durch eine kompakte Bauform aus, da die Daten-Pufferbatterie klein gehalten werden kann. Die Gesamtschaltung ist nicht hochohmig ausgelegt, so daß eine elektromagnetische Störanfälligkeit zuverlässig vermieden wird. Mit der Batterie 17 werden die Informationen der dem Codeträger 8 zugeordneten Auswerteelektronik 12 zuverlässig gepuffert, so daß diese Informationen auch im Falle einer Betriebsspannungsabschaltung erhalten bleiben. Des weiteren können durch Redundanz von mindestens drei Sensoren 9 bis 11 bzw. Zählern 21 bis 23 im Multiturn auftretende Fehler wirkungsvoll abgefangen, korrigiert und/oder ohne Maschinenstillstandzeiten als Warnmeldung ausgegeben werden.

## Patentansprüche

1. Drehgeber mit einer Geberwelle (5,) die wenigstens einen Codeträger (6, 8) trägt, dem eine Auswerteelektronik (12) zugeordnet ist, die die von einem Sensor (9 bis 11) ausgelösten Signale einem Logikmodul (19) und einem nachgeschalteten Zähler (29) zuführt, das die Signale in Zählimpulse wandelt und damit die Zahl der Drehungen erfasst, dass mindestens ein weiterer Sensor (9 bis 11) und mindestens ein weiterer Zähler (21 bis 23) für die Erfassung der Zahl der Umdrehungen vorgesehen ist, dass jeder Zähler (21 bis 23) für sich zur Erfassung mehrer Drehungen der Geberwelle (5) vorgesehen ist, dass sämtliche Zähler (21 bis 23) an das Logikmodul (19) angeschlossen sind, **dadurch gekennzeichnet, dass** die Sensoren (9 bis 11) und die zugehörigen Zähler (21 bis 23) jeweils in einem zwei Sensoren (9 bis 11) und einen Zähler (21 bis 23) aufweisenden Zählkanal liegen, dass ein Sensor-Pegelkomparator (27) die Pegelzustände der Signale der Sensoren (9 bis 11) mit in einer Tabelle angegebenen Bit-Kombinationen vergleicht und bei zulässigen Bit-Kombinationen weitere Aktionen ableitet oder eine Warnung ausgibt, und dass die Inhalte der Zähler (21 bis 23) in einem Zählkomparator (29) verglichen werden, wobei bei Abweichung der entsprechende Zähler gesperrt oder ein entsprechendes Warnsignal abgegeben wird.

2. Drehgeber nach Anspruch 1,
**dadurch gekennzeichnet, dass** das Logikmodul (19) ein digitales Störimpulsfilter (26) aufweist, das im Zählkanal liegt.

3. Drehgeber nach Anspruch 2,
**dadurch gekennzeichnet, dass** dem Störimpulsfilter (26) der Sensor-Pegelkomparator (27) nachgeschaltet ist.

4. Drehgeber nach einem der Ansprüche 1 bis 3,
**dadurch gekennzeichnet, dass** dem Zählerkomparator (29) ein Fehlerausgabemodul (28) nachgeschaltet ist.

5. Drehgeber nach einem der Ansprüche 1 bis 4,
**dadurch gekennzeichnet, dass** dem Zähler (21 bis 23) ein UND-Glied (32 bis 34) nachgeschaltet ist, an das der Zählerkomparator (29) angeschlossen ist.

6. Drehgeber nach einem der Ansprüche 1 bis 5,
**dadurch gekennzeichnet, dass** mindestens drei Sensoren (9 bis 11) vorgesehen sind.

## Claims

1. Rotary encoder with an encoder shaft (5) which carries at least one code carrier (6, 8), to which are assigned evaluation electronics (12) which supply the signals triggered by a sensor (9 to 11) to a logic module (19) and to a downstream counter (29) which converts the signals into counting pulses and hence detects the number of revolutions, that at least one further sensor (9 to 11) and at least one further counter (21 to 23) are provided for detecting the number of revolutions, that each counter (21 to 23) in itself is provided for detecting a plurality of revolutions of the encoder shaft (5), that all the counters (21 to 23) are connected to the logic module (19), **characterised in that** the sensors (9 to 11) and the associated counters (21 to 23) are each located in a counting channel having two sensors (9 to 11) and a counter (21 to 23), **in that** a sensor level comparator (27) compares the level states of the signals of the sensors (9 to 11) with bit combinations specified in a table and, given permissible bit combinations, derives further actions or issues a warning, and **in that** the contents of the counters (21 to 23) are compared in a counting comparator (29), and in the event of deviation the corresponding counter is blocked or a corresponding warning signal is emitted.

2. Rotary encoder according to Claim 1,
**characterised in that** the logic module (19) has a digital interfering-pulse filter (26) located in the counting channel.

3. Rotary encoder according to Claim 2,
**characterised in that** the sensor level comparator (27) is downstream of the interfering-pulse filter (26).

4. Rotary encoder according to one of Claims 1 to 3, **characterised in that** an error output module (28) is downstream of the counter comparator (29).

5. Rotary encoder according to one of Claims 1 to 4, **characterised in that** an AND gate (32 to 34), to which the counter comparator (29) is connected, is downstream of the counter (21 to 23).

6. Rotary encoder according to one of Claims 1 to 5, **characterised in that** at least three sensors (9 to 11) are provided.

## Revendications

1. Capteur de rotation comprenant un arbre de capteur (5), qui porte au moins un porte-code (6, 8) auquel est associée une électronique d'évaluation (12) qui amène les signaux déclenchés par un détecteur (9 à 11) à un module logique (19) et à un compteur (29) branché à la suite, lequel convertit les signaux en impulsions de comptage et détecte ainsi le nombre des rotations, dans lequel il est prévu au moins un autre détecteur (9 à 11) et au moins un autre compteur (21 à 23) pour la détection du nombre des rotations, dans lequel chaque compteur (21 à 23) est prévu en lui-même pour la détection de plusieurs rotations de l'arbre de capteur (5), dans lequel la totalité des compteurs (21 à 23) sont branchés au module logique (19),
**caractérisé en ce que** les détecteurs (9 à 11) et les compteurs associés (21 à 23) sont placés respectivement dans un canal de comptage qui comporte deux détecteurs (9 à 11) et un compteur (21 à 23), **en ce qu'**un comparateur de niveau de détecteur (27) compare les états des niveaux des signaux des détecteurs (9 à 11) avec des combinaisons de bits indiqués dans un tableau et qui, pour des combinaisons de bits admissibles, déclenche d'autres actions ou délivre un avertissement, et **en ce que** les contenus des compteurs (21 à 23) sont comparés dans un comparateur de comptage (29), et en cas d'écart le compteur correspondant est bloqué ou un signal d'avertissement correspondant est délivré.

2. Capteur de rotation selon la revendication 1,
**caractérisé en ce que** le module logique (19) comprend un filtre numérique d'impulsions parasites (26) qui se trouve dans le canal de comptage.

3. Capteur de rotation selon la revendication 2,
**caractérisé en ce que** le comparateur de niveau de détecteur (27) est branché à la suite du filtre d'impulsions parasites (26).

4. Capteur de rotation selon l'une des revendications 1 à 3,
**caractérisé en ce qu'**un module d'indication d'erreur (28) est branché à la suite du comparateur de comptage (29).

5. Capteur de rotation selon l'une des revendications 1 à 4,
**caractérisé en ce qu'**un circuit ET (32 à 34) est branché à la suite du compteur (21 à 23), auquel est branché le comparateur de comptage (29).

6. Capteur de rotation selon l'une des revendications 1 à 5,
**caractérisé en ce qu'**il est prévu au moins trois détecteurs (9 à 11).
